# EUROPÄISCHE PATENTANMELDUNG

(11) **EP 3 089 119 A1**
(43) Veröffentlichungstag der Anmeldung: **02.11.2016**
(21) Anmeldenummer: 16167178.9
(22) Anmeldetag: 27.04.2016
(51) Int. Cl.: G07C 9/00, G06K 7/00, G06K 9/00

(54) **SYSTEM ZUR ZUTRITTSAUTHENTIFIZIERUNG AN EINEM ZUTRITTSPUNKT EINES GEBÄUDES ODER EINES RAUMES**

(30) Priorität: 29.04.2015 DE 202015003162 U
(71) Anmelder: BKS GmbH, 42549 Velbert (DE)
(72) Erfinder: Braam, Reinhold, 46414 Rhede (DE)
(74) Vertreter: DREISS Patentanwälte PartG mbB

(57) **Zusammenfassung**

Ein System (10) zur Zutrittsauthentifizierung an einem Zutrittspunkt (12) eines Gebäudes oder eines Raumes, mit einem mobilen Endgerät (14), einem am Zutrittspunkt (12) angeordneten Lesegerät (18) und einer mit dem Lesegerät (18) zusammenwirkenden Auswerteeinheit (19, 21), ist im Hinblick auf eine manipulationssichere Zutrittsauthentifizierung mit einfachen konstruktiven Mitteln derart ausgestaltet und weitergebildet, dass das mobile Endgerät (14) einen Fingerscansensor (16) und eine NFC-Schnittstelle aufweist, wobei das Lesegerät (18) eine NFC-Schnittstelle aufweist, wobei die Auswerteeinheit (19, 21) einen Speicher mit hinterlegten Zutrittsberechtigungen aufweist, und wobei das mobile Endgerät (14) dazu ausgebildet ist, einen gescannten Fingerabdruck mittels einer NFC-Verbindung (24) an das Lesegerät (18) zu übertragen, wobei mittels der Auswerteeinheit (19, 21) ein Vergleich mit den hinterlegten Zutrittsberechtigungen erfolgt.

## Beschreibung

Die vorliegende Erfindung betrifft ein System zur Zutrittsauthentifizierung an einem Zutrittspunkt eines Gebäudes oder eines Raumes, mit einem mobilen Endgerät, einem am Zutrittspunkt angeordneten Lesegerät und einer mit dem Lesegerät zusammenwirkenden Auswerteeinheit.

Aus dem Stand der Technik sind Systeme zur Zutrittsauthentifizierung bekannt, bei denen ein Fingerabdruckscanner in ein Lesegerät integriert ist, das an einem Zutrittspunkt ortsfest installiert ist und zur Zutrittskontrolle dient. Dies erfolgt durch Einscannen von Fingerabdrücken und eine Freigabe des Zutrittspunkts im Falle einer vorliegenden Zutrittsberechtigung.

Zudem sind aus dem Stand der Technik Systeme zur Zutrittsauthentifizierung bekannt, bei denen ein mobiler, ortsungebundener Transponder mit einem integrierten Fingerabdruckscanner ausgestattet ist.

Bei in einem ortsfesten Lesegerät integrierten Fingerabdruckscannern ist von Nachteil, dass diese, bspw. im Falle von Außentüren, oftmals über viele Stunden hinweg unbeaufsichtigt sind, so dass die Gefahr von Manipulationen durch unbefugte Dritte besteht. Dies kann bspw. durch Verwendung von Silikonfingern erfolgen, die dem Fingerabdruck einer berechtigten Person nachgebildet sind, oder durch Auswerten eines auf dem Scanner zurückgebliebenen Fingerabdrucks.

Bei mobilen, ortsungebundenen Transpondern mit integriertem Fingerabdruckscanner ist von Nachteil, dass diese abgesehen vom hohen Anschaffungspreis durch Integration von Fingerabdruckscanner und Batterie eine entsprechende Größe aufweisen, was Einschränkungen in der Handhabung mit sich bringt. Problematisch ist auch die begrenzte Funktionsdauer auf Grund der eingeschränkten Batteriekapazität. Insofern muss eine zusätzliche Authentifizierungsmöglichkeit für den Fall eines Ausfalls des Transponders vorhanden sein.

Der vorliegenden Erfindung liegt daher die Aufgabe zugrunde, mit einfachen konstruktiven Mitteln eine manipulationssichere Zutrittsauthentifizierung zu ermöglichen.

Die voranstehende Aufgabe wird durch ein System zur Zutrittsauthentifizierung mit den Merkmalen des Schutzanspruchs 1 gelöst. Danach zeichnet sich das System dadurch aus, dass das mobile Endgerät einen Fingerscansensor und eine NFC-Schnittstelle aufweist, wobei das Lesegerät eine NFC-Schnittstelle aufweist, wobei die Auswerteeinheit (19) einen Speicher mit hinterlegten Zutrittsberechtigungen aufweist, und wobei das mobile Endgerät dazu ausgebildet ist, einen gescannten Fingerabdruck mittels einer NFC-Verbindung an das Lesegerät zu übertragen, wobei mittels der Auswerteeinheit ein Vergleich mit den hinterlegten Zutrittsberechtigungen erfolgt.

Mit dem Fingerabdrucksensor des mobilen Endgeräts wird ein Fingerabdruck erfasst und per NFC (Near Field Communication bzw. Nahfeldkommunikation) an das Lesegerät übertragen. Das Lesegerät wirkt mit der Auswerteeinheit zusammen, die den übertragenen Fingerabdruck mit gespeicherten Vergleichsdaten vergleicht. Korrespondiert der übertragene Fingerabdruck mit einer hinterlegten Zutrittsberechtigung, wird der Zutrittspunkt freigegeben.

Durch Verwendung dieses Systems können der apparative Aufwand verringert sowie die Handhabung optimiert werden. So lassen sich bei diesem System Lesegeräte einsetzen, die keinen Fingerabdrucksensor aufweisen, so dass es sich bei den Lesegeräten um fingerscannerlose Lesegeräte handeln kann. Durch Verzicht auf einen Fingerabdruckscanner ist die Gefahr von Manipulationen am Lesegerät ganz wesentlich reduziert.

Personen, die zum Zutritt berechtigt sind und am Zutrittspunkt einen Zutritt erhalten wollen, müssen lediglich ein mobiles Endgerät, beispielsweise ein Smartphone oder dergleichen, mit sich führen, was für diese keinen Mehraufwand in der Handhabung darstellt, da ein mobiles Endgerät heutzutage ständiger Begleiter ist. Auf diese Weise kann das mobile Endgerät eine zusätzliche Funktion erhalten, wobei dadurch auf einen separaten Transponder verzichtet werden kann. Durch den vergleichsweise einfachen Aufbau des Lesegeräts können der apparative Aufwand an den Zutrittspunkten verringert und somit Kosten eingespart werden, insbesondere bei einer Vielzahl an Zutrittspunkten.

Der Fingerscansensor des mobilen Endgeräts ist ein zusätzlicher, von einer gegebenenfalls im mobilen Endgerät vorhandenen Digitalkamera abweichender Fingerscansensor. Das mobile Endgerät kann als Smartphone, Tablet oder Tablet-PC ausgebildet sein.

Die Auswerteeinheit kann auch als Vergleichseinheit bezeichnet werden, die einen Vergleich zwischen dem gescannten Fingerabdruck und den hinterlegten Zutrittsberechtigungen vornimmt. Die Zutrittsberechtigungen können beispielsweise in Form einer Datenbank mit darin hinterlegten und zum Zutritt berechtigten Fingerabdrücken gespeichert sein.

In vorteilhafter Weise kann eine Übertragung des Fingerabdrucks in Form eines Templates erfolgen. Somit wird der Fingerabdruck selbst, beispielsweise in Form dessen Musters oder einer dieses Muster repräsentierenden Dateninformation, an das Lesegerät übertragen, wobei mittels der mit dem Lesegerät zusammenwirkenden Auswerteeinheit eine Auswertung und ein Vergleich mit hinterlegten Zutrittsberechtigungen, insbesondere von Mustern von Fingerabdrücken oder diese Muster repräsentierenden Daten, erfolgt. Damit ist die Gefahr von Manipulationen auf Seiten des mobilen Endgeräts reduziert. Zudem ist somit eine Verwaltung von Zutrittsberechtigungen vereinfacht, da diese auf Seiten der Auswerteeinheit, beispielsweise auch temporär, freigeschalten und/oder gesperrt werden können. Hierfür kann die Auswerteeinheit drahtlos oder drahtgebunden mit einer Konfigurationseinrichtung verbunden sein, beispielsweise einem Computer mit einem darauf ablaufenden Verwaltungsprogramm zur Verwaltung von Zutrittsberechtigungen.

Zweckmäßigerweise kann die Auswerteeinheit mit einem ansteuerbaren und den Zutrittspunkt verriegelnden Schließelement gekoppelt sein. Damit kann bei vorliegender Zutrittsberechtigung eine Entriegelung des Zutrittspunkts erfolgen, wozu das Schließelement von einer Verriegelungsstellung in eine Freigabestellung verbringbar ist. Bei dem Schließelement kann es sich um eine Schließriegel, einen Türöffner oder dergleichen handeln. Das Schließelement kann durch einen Aktuator ansteuerbar sein. Die Auswerteeinheit kann über eine oder mehrere Steuerleitungen oder Signalleitungen mit dem Schließelement, insbesondere mit dessen Aktuator, gekoppelt sein. Eine solche Kopplung kann dann gewählt werden, wenn sich die Auswerteeinheit hinter dem Zutrittspunkt befindet und über eine gesicherte Verbindung mit dem Lesegerät gekoppelt ist.

Ebenso denkbar ist eine Kopplung von Auswerteeinheit und Schließelement mittels einer gesicherten Verbindung, insbesondere dann, wenn die Auswerteeinheit in das Lesegerät integriert ist und sich zusammen mit dem Lesegerät vor dem Zutrittspunkt befindet.

Im Konkreten kann die Auswerteeinheit dazu ausgebildet sein, bei vorliegender Zutrittsberechtigung das Schließelement anzusteuern, so dass der Zutrittspunkt freigebbar ist oder freigegeben wird. Somit ist der apparative Aufwand reduziert, da eine Ansteuerung des Schließelements unmittelbar durch die Auswerteeinheit erfolgt. Eine Verkabelung, Signalübertragung und/oder Energieversorgung eines weiteren Steuergeräts ist somit nicht erforderlich. Zudem muss lediglich die Auswerteinheit gegen unbefugte Manipulationsversuche geschützt werden.

Im Konkreten kann das mobile Endgerät ein darauf ablaufendes und insbesondere vom Betriebssystem des mobilen Endgeräts abweichendes Programm zur Ansteuerung und/oder Kopplung von NFC-Schnittstelle und Fingerscansensor aufweisen. Dabei sorgt das Programm dafür, dass NFC-Schnittstelle und Fingerscansensor zum Zwecke der Zutrittsauthentifizierung miteinander zusammenwirken.

In vorteilhafter Weise kann die Auswerteeinheit in das Lesegerät integriert sein. Demnach können diese beiden Komponenten in einem gemeinsamen Gehäuse angeordnet sein und unmittelbar miteinander zusammenwirken. Um eine NFC-Verbindung mit dem mobilen Endgerät zu ermöglichen, sind Lesegerät und Auswerteeinheit vor dem Zutrittspunkt, d.h. auf der ungesicherten Seite des Zutrittspunkts, angeordnet.

Zweckmäßigerweise ist die Auswerteeinheit mittels einer gesicherten Verbindung mit dem Schließelement, das im oder hinter dem Zutrittspunkt angeordnet ist, gekoppelt. Auf diese Weise ist eine sichere Verbindung von vor dem Zutrittspunkt zugänglichen Komponenten zu dem im oder hinter dem Zutrittspunkt angeordneten Schließelement geschaffen. Die gesicherte Verbindung kann durch eine Verschlüsselung und ein Pairing geschützt sein.

Alternativ hierzu kann die Auswerteeinheit separat vom Lesegerät angeordnet sein und mittels einer gesicherten Verbindung mit dem Lesegerät gekoppelt sein. Hiermit lässt sich eine vergleichsweise hohe Sicherheit erzielen, da nur das Lesegerät unmittelbar zugänglich ist. Somit ist nur das Lesegerät vor dem Zutrittspunkt, d.h. auf der ungesicherten Seite des Zutrittspunkts, angeordnet. Die Auswerteeinheit und das Schließelement können im oder hinter dem Zutrittspunkt, d.h. auf der gesicherten Seite des Zutrittspunkts angeordnet sein. Die gesicherte Verbindung zwischen Lesegerät und Auswerteeinheit kann durch eine Verschlüsselung und ein Pairing geschützt sein. Auswerteeinheit und Schließelement können über eine oder mehrere Steuerleitungen miteinander gekoppelt sein.

Die Erfindung wird im Folgenden anhand der Figuren näher erläutert. Es zeigen:
- Fig. 1: in einer schematischen Ansicht eine erste Ausführungsform des Systems zur Zutrittsauthentifizierung; und
- Fig. 2: in einer schematischen Ansicht eine zweite Ausführungsform des Systems zur Zutrittsauthentifizierung.

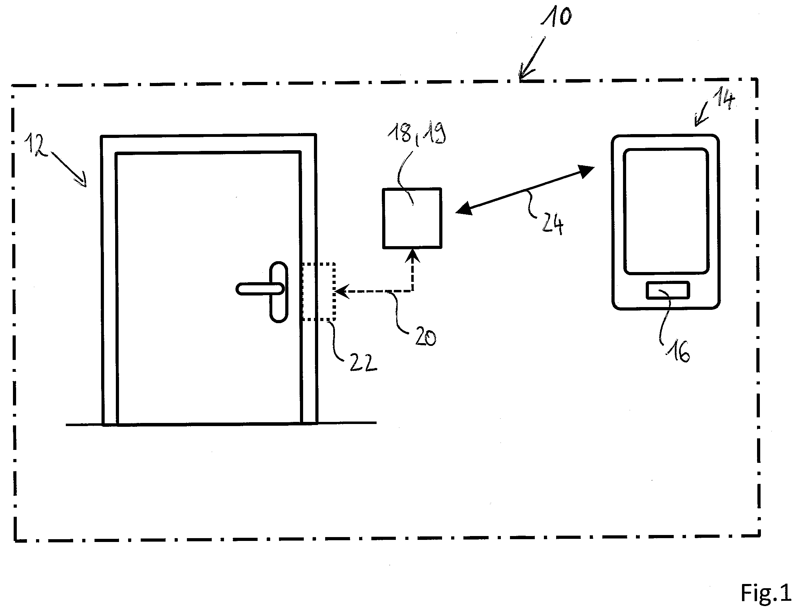

Figur 1 zeigt ein System 10 zur Zutrittsauthentifizierung an einem Zutrittspunkt 12 eines Gebäudes oder eines Raumes.

Das System 10 weist ein mobiles Endgerät 14 auf, das im vorliegenden Ausführungsbeispiel als Smartphone 14 ausgebildet ist und nachfolgend der Einfachheit halber weiterhin als mobiles Endgerät 14 bezeichnet wird.

Das mobile Endgerät 14 weist eine NFC-Schnittstelle (Near Field Communication Schnittstelle), also eine Schnittstelle zur Nahfeldkommunikation auf (nicht dargestellt). Zudem ist das mobile Endgerät 14 mit einem Fingerscansensor 16 ausgestattet, mit dem Fingerabdrücke einer Bedienperson eingescannt werden können.

Das System 10 umfasst außerdem ein am Zutrittspunkt 12 angeordnetes Lesegerät 18, das ebenfalls eine NFC-Schnittstelle, also eine Schnittstelle zur
Nahfeldkommunikation aufweist (nicht dargestellt). In das Lesegerät 18 ist eine Auswerteeinheit 19 integriert. Die Auswerteeinheit 19 verfügt über einen Speicher mit hinterlegten Zutrittsberechtigungen, wobei es sich um Templates von Fingerabdrücken oder diese Fingerabdrücke repräsentierende Daten handeln kann. Die Auswerteeinheit 19 kann auch als Vergleichseinheit 19 bezeichnet werden. Lesegerät 18 und Auswerteeinheit 19 sind vor dem Zutrittspunkt 12, d.h. auf der ungesicherten Seite des Zutrittspunkts 12, angeordnet.

Die Auswerteeinheit 19 ist über eine gesicherte Verbindung 20 mit einem ansteuerbaren und den Zutrittspunkt 12 verriegelnden Schließelement 22 gekoppelt. Dabei kann es sich beispielsweise um einen Türöffner oder Schließriegel handeln, der durch einen im Schließelement 22 angeordneten Aktuator ansteuerbar ist. Das Schließelement 22 ist im oder hinter dem Zutrittspunkt 12, d.h. auf einer gesicherten Seite des Zutrittspunkts 12, angeordnet. Die gesicherte Verbindung 20 kann mittels einer Verschlüsselung und mittels eines Pairings geschützt werden.

Da sowohl das mobile Endgerät 14 als auch das am Zutrittspunkt 12 angeordnete Lesegerät 18 eine NFC-Schnittstelle aufweisen, lässt sich zwischen diesen Komponenten eine NFC-Verbindung 24 herstellen. Auf dem mobilen Endgerät 14 kann ein Programm oder eine App ablaufen, die den Fingerabdrucksensor 16 und die NFC-Schnittstelle derart miteinander koppelt, dass durch den Fingerabdrucksensor 16 ein Template eines eingescannten Fingerabdrucks erfasst und über die NFC-Schnittstelle des mobilen Endgeräts 14 über die NFC-Verbindung 24 an das Lesegerät 18 übertragen werden kann.

Das System 10 zur Zutrittsauthentifizierung arbeitet folgendermaßen:
Möchte ein Benutzer Zutritt am Zutrittspunkt 12 eines Gebäudes oder Raumes erhalten, muss er einen Finger über den Fingerscansensor 16 führen, so dass das auf dem mobilen Endgerät 14 ablaufende Programm durch Zugriff auf den Fingerscansensor 16 ein Template des gescannten Fingers erfassen kann. Gegebenenfalls muss der Benutzer vor einem Einscannen des Fingers das entsprechende Programm auf dem mobilen Endgerät 14 starten. Durch Ansteuerung des auf dem mobilen Endgerät 14 ablaufenden Programms wird das Template des eingescannten Fingers mittels der NFC-Schnittstelle des mobilen Endgeräts 14 über die NFC-Verbindung 24 an das Lesegerät 18 am Zutrittspunkt 12 übertragen.

Das Lesegerät 18 wirkt mit der Auswerteeinheit 19 zusammen und ist mit dieser verbunden. Die Auswerteeinheit 19 enthält in ihrem Speicher (nicht dargestellt) hinterlegte Zutrittsberechtigungen in Form von Templates von eingescannten Fingerabdrücken von zum am Zutrittspunkt 12 zutrittsberechtigten Personen. Das vom mobilen Endgerät 14 an das Lesegerät 18 gesendete Template, das an die Auswerteeinheit 19 weitergegeben wird, wird mit den auf der Auswerteeinheit 19 hinterlegten Zutrittsberechtigungen oder Templates verglichen.

Kann die Auswerteeinheit 19 oder die Vergleichseinheit 19 einen dem vom mobilen Endgerät 14 übertragenen Template entsprechende Zugangsberechtigung, beispielsweise also ein identisches oder nahezu identisches gespeichertes Template identifizieren, wird über die gesicherte Verbindung 20 ein Signal an das Schließelement 22 weitergegeben. Das Schließelement 22 wird angesteuert und betätigt, so dass der Zutrittspunkt 12 freigegeben wird und die Benutzer somit einen Zutritt erhalten können.

Kann die Auswerteeinheit 19 keine mit dem vom mobilen Endgerät 14 übertragenen Template korrespondierende Zutrittsberechtigung, beispielsweise in Form eines identischen Templates, vorfinden, erfolgt keine Ansteuerung des Schließelements 22. Der verwehrte Zutritt kann dem Benutzer des mobilen Endgeräts 14 signalisiert werden, beispielsweise durch Übertragung eines Signals vom Lesegerät 18 über die NFC-Verbindung 24 an das mobile Endgerät 14, wo dem Benutzer optisch und/oder akustisch eine Zutrittsverweigerung signalisiert werden kann.

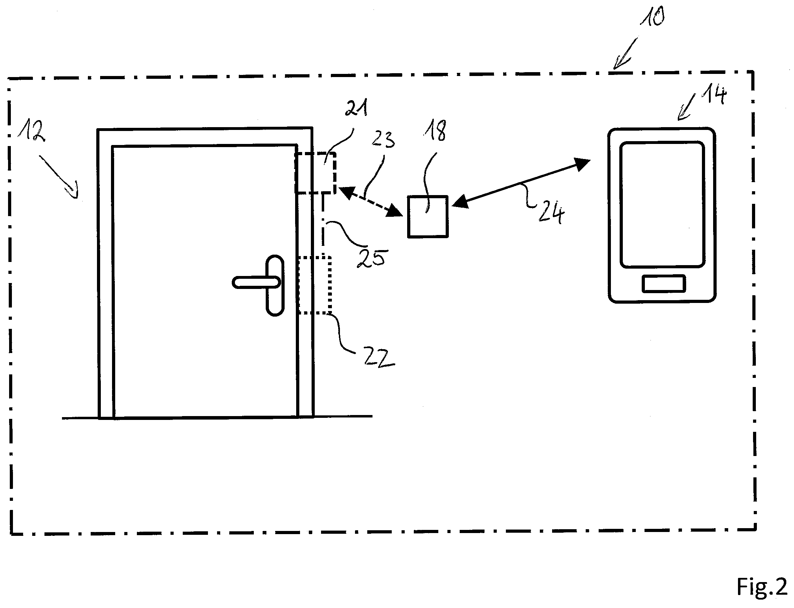

In Figur 2 ist eine weitere Ausführungsform des Systems 10 zur Zutrittsauthentifizierung dargestellt.

Die weitere Ausführungsform entspricht weitestgehend der voranstehend beschriebenen ersten Ausführungsform, so dass zur Vermeidung von Wiederholungen auf die voranstehenden Ausführungen verwiesen wird, wobei gleiche oder funktional gleiche Komponenten mit identischen Bezugszeichen versehen sind.
Abweichend von der ersten Ausführungsform ist bei der zweiten Ausführungsform die Auswerteeinheit 21 im oder hinter dem Zutrittspunkt 12, also auf der gesicherten Seite des Zutrittspunkts 12, angeordnet. Das Lesegerät 18 ist vor dem Zutrittspunkt 12 angeordnet. Das Lesegerät 18 und die Auswerteeinheit 21 sind über eine gesicherte Verbindung 23 miteinander verbunden. Die Verbindung 23 kann durch eine Verschlüsselung und ein Pairing gesichert sein.

Die Auswerteeinheit 21 ist mittels einer oder mehrerer Steuerleitungen 25 mit dem Schließelement 22 verbunden. Im Falle einer vorliegenden Zutrittsberechtigung kann die Auswerteeinheit 21 das Schließelement 22 ansteuern, so dass der Zutrittspunkt 12 freigegeben wird.

Zusammenfassend kann durch das vorgeschlagene System zur Zutrittsauthentifizierung mit einfachen und konstruktiven Mitteln ein sicherer und komfortabler Zutritt zu einem Zutrittspunkt realisiert werden. Dadurch, dass am Lesegerät 18 kein Fingerabdrucksensor erforderlich ist und somit ein fingerscannerloses Lesegerät 18 eingesetzt werden kann, lässt sich der apparative Aufwand am Zutrittspunkt deutlich reduzieren, und zwar durch Vereinfachung der Lesegeräte. Zudem ist somit die Gefahr von unerwünschten Manipulationen am Zutrittspunkt deutlich reduziert, da dort kein Fingerabdrucksensor vorhanden ist.

## Patentansprüche

1. System (10) zur Zutrittsauthentifizierung an einem Zutrittspunkt (12) eines Gebäudes oder eines Raumes, mit einem mobilen Endgerät (14), einem am Zutrittspunkt (12) angeordneten Lesegerät (18) und einer mit dem Lesegerät (18) zusammenwirkenden Auswerteeinheit (19, 21), wobei das mobile Endgerät (14) einen Fingerscansensor (16) und eine NFC-Schnittstelle aufweist, wobei das Lesegerät (18) eine NFC-Schnittstelle aufweist, wobei die Auswerteeinheit (19, 21) einen Speicher mit hinterlegten Zutrittsberechtigungen aufweist, und wobei das mobile Endgerät (14) dazu ausgebildet ist, einen gescannten Fingerabdruck mittels einer NFC-Verbindung (24) an das Lesegerät (18) zu übertragen, wobei mittels der Auswerteeinheit (19, 21) ein Vergleich mit den hinterlegten Zutrittsberechtigungen erfolgt.

2. System (10) nach Anspruch 1, **dadurch gekennzeichnet, dass** eine Übertragung des Fingerabdrucks in Form eines Templates erfolgt.

3. System (10) nach Anspruch 1 oder 2, **dadurch gekennzeichnet, dass** die Auswerteeinheit (19, 21) mit einem ansteuerbaren und den Zutrittspunkt (12) verriegelnden Schließelement (22) gekoppelt ist.

4. System (10) nach Anspruch 3, **dadurch gekennzeichnet, dass** die Auswerteeinheit (19, 21) dazu ausgebildet ist, bei vorliegender Zutrittsberechtigung das Schließelement (22) anzusteuern, so dass der Zutrittspunkt (12) freigebbar ist oder freigegeben wird.

5. System (10) nach einem der vorhergehenden Ansprüche, **dadurch gekennzeichnet, dass** das mobile Endgerät (14) ein Programm zur Ansteuerung und/oder Kopplung von NFC-Schnittstelle und Fingerscansensor (16) aufweist.

6. System (10) nach einem der vorhergehenden Ansprüche, **dadurch gekennzeichnet, dass** die Auswerteeinheit (19) in das Lesegerät (18) integriert ist.

7. System (10) nach Anspruch 6 und 3, **dadurch gekennzeichnet, dass** die Auswerteeinheit (19) mittels einer gesicherten Verbindung (20) mit dem Schließelement (22) gekoppelt ist.

8. System (10) nach einem Ansprüche 1 bis 5, **dadurch gekennzeichnet, dass** die Auswerteeinheit (21) separat vom Lesegerät (18) angeordnet und mittels einer gesicherten Verbindung (23) mit dem Lesegerät (18) gekoppelt ist.
